# EUROPÄISCHE PATENTANMELDUNG

(11) **EP 0 985 833 A1**
(43) Veröffentlichungstag der Anmeldung: **15.03.2000**
(21) Anmeldenummer: 99116115.9
(22) Anmeldetag: 18.08.1999
(51) Int. Cl.: F16B 5/02, F16B 37/04

(54) **Befestigungsanordnung zum Befestigen zweier plattenförmiger Bauteile**

(30) Priorität: 10.09.1998 DE 19841438
(71) Anmelder: Böllhoff GmbH, 33649 Bielefeld (DE)
(72) Erfinder: Fangmann, Herbert, 49393 Lohne (DE); Hauck, Peter, 96145 Sesslach (DE); Süssenbach, Rainer, 33803 Steinhagen (DE)
(74) Vertreter: Wehnert, Werner, Dipl.-Ing. Patentanwälte Hauck, Graalfs, Wehnert, Döring, Siemons

(57) **Zusammenfassung**

Befestigungsanordnung zum Befestigen eines ersten plattenförmigen Bauteils (2) an einem zweiten plattenförmigen Bauteil (4), mit einem Flansch (8), der an dem ersten Bauteil anliegt und an dem zweiten Bauteil mit vorgegebenem Abstand zu einer Oberfläche (5) des zweiten Bauteils so angeformt ist, daß zwischen dieser Oberfläche und dem Flansch ein einseitig offener Zwischenraum vorhanden ist, einer Befestigungsleiste (10), die mit einer Reihe von Befestigungsaugen (16) versehen ist und in den Zwischenraum so einsteckbar ist, daß die Befestigungsaugen zu in entsprechenden Reihen angeordneten Befestigungslöchern (28,30) im ersten Bauteil und im Flansch des zweiten Bauteils ausgerichtet sind, und einer entsprechenden Anzahl von Schrauben (12), die durch die Befestigungslöcher hindurch in die Befestigungsaugen der Befestigungsleiste einschraubbar sind.

## Beschreibung

Die vorliegende Erfindung betrifft eine Befestigungsanordnung zum Befestigen eines ersten plattenförmigen Bauteils an einem zweiten plattenförmigen Bauteil.

Bei dem ersten und zweiten Bauteil kann es sich beispielsweise um die Innenschale und die Außenhaut, insbesondere aus Kunstoff, vorzugsweise SMC- und GMT-Formteile, einer Kraftfahrzeugtür handeln. Derartige Befestigungsanordnungen dürfen die Türaußenhaut nicht durchbrechen. Ferner müssen sie recyclefähig und kostengünstig sowohl in der Herstellung wie auch in der Montage sein und dennoch für eine zuverlässige und möglichst auch schwingungsfreie Befestigung der beiden Bauteile aneinander sorgen.

Der Erfindung liegt somit die Aufgabe zugrunde, eine in der Herstellung und Montage kostengünstige Befestigungsanordnung zum Befestigen eines ersten plattenförmigen Bauteils an einem zweiten plattenförmigen Bauteil zu schaffen, bei der die Außenfläche des zweiten Bauteils unversehrt bleibt und die dennoch für eine sichere und schwingungsfreie Verbindung zwischen den beiden Bauteilen sorgt.

Die diese Aufgabe lösende Erfindung ist in Anspruch 1 definiert.

Erfindungsgemäß ist eine Befestigungsleiste vorgesehen, die in einen Zwischenraum zwischen einem Flansch und der zugewandten Oberfläche des zweiten Bauteils eingesteckt werden kann. Hierbei werden an der Befestigungsleiste vorgesehene Befestigungsaugen zu Befestigungslöchern im ersten Bauteil und im Flansch des zweiten Bauteils ausgerichtet, so daß Schrauben durch die Befestigungslöcher hindurch in die Befestigungsaugen eingeschraubt und damit die beiden Bauteile miteinander verbunden werden können.

Bei der erfindungsgemäß ausgebildeten Befestigungsanordnung braucht somit nicht für jede Schraube ein eigenes Gewindeelement wie z.B. eine Blindnietmutter vorgesehen werden; vielmehr ist nur eine einzige Befestigungsleiste für eine größere Anzahl von Befestigungspunkten und deren Schrauben erforderlich. Hierdurch wird die Montage für die Befestigungsanordnung erheblich vereinfacht. Dennoch sorgt die vorzugsweise aus Kunststoffbestehende Befestigungsleiste für einen zuverlässigen und schwingungsfreien Zusammenhalt der beiden Bauteile. Da die Schraubverbindung über den Flansch erfolgt, kann die Außenfläche des zweiten Bauteils unversehrt bleiben.

Vorteilhafte Ausgestaltungen der Erfindung sind in den Unteransprüchen definiert.

Anhand der Zeichnung wird ein Ausführungsbeispiel der Erfindung näher erläutert. Es zeigt:
Fig. 1 einen Querschnitt durch eine Befestigungsanordnung;
Fig. 2 eine Draufsicht auf die Befestigungsleiste für die Befestigungsanordnung der Fig. 1;
Fig. 3 eine Seitenansicht der Befestigungsleiste in Fig. 2;
Fig. 4 eine Schnittansicht in Blickrichtung der Pfeile IV-IV in Fig. 1;
Fig. 5 eine Schnittansicht in Blickrichtung der Pfeile V-V in Fig. 3;
Fig. 6 eine Schnittansicht in Blickrichtung der Pfeile VI-VI in Fig. 3.

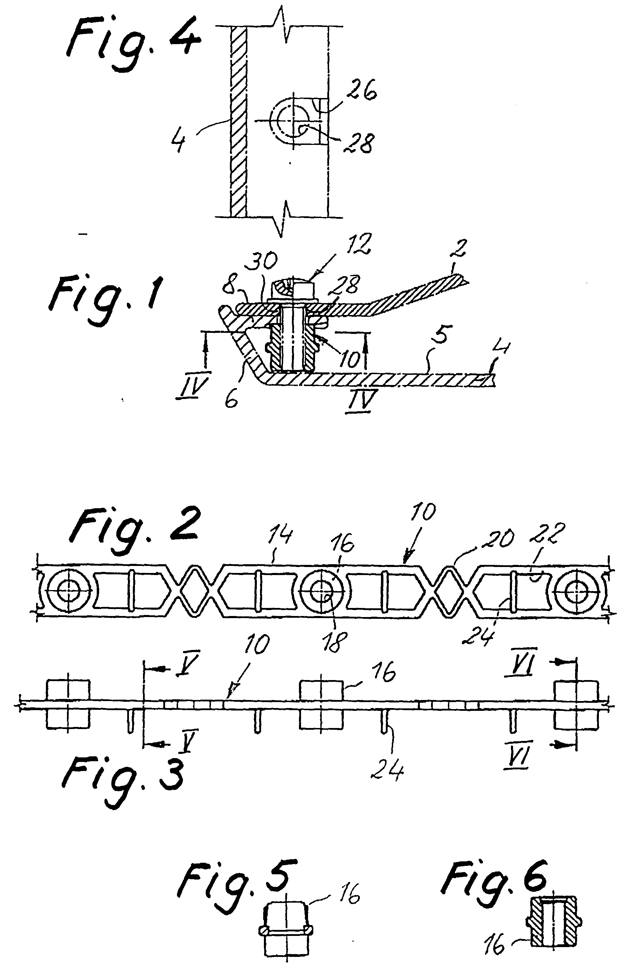

Die in Fig. 1 gezeigte Befestigungsanordnung dient zum Befestigen eines plattenförmigen Bauteils 2 an einem plattenförmigen Bauteil 4, bei denen es sich um die Innenschale bzw. Außenhaut einer Fahrzeugtür (nicht gezeigt) handeln kann. Es versteht sich jedoch, daß die Befestigungsanordnung auch zum Verbinden anderer Bauteile verwendet werden kann.

Das Bauteil 4 ist mit einem am Bauteil 2 anliegenden Flansch 8 versehen, der über einen schräg verlaufenden Wandabschnitt 6 mit dem übrigen Teil des Bauteils 4 so verbunden ist, daß der Flansch 8 mit vorgegebenem Abstand und parallel zur Oberfläche 5 des Bauteils 4 verläuft und somit einen Zwischenraum zwischen der Oberfläche 5 und dem Flansch 8 bildet.

In diesen Zwischenraum ist eine Befestigungsleiste 10 eingesetzt, die gewissermaßen Gegenmuttern für Schrauben 12 bildet, wie noch genauer erläutert wird.

Die Befestigungsleiste 10 ist, wie in den Fign. 2 und 3 zu sehen ist, als in einer Ebene liegender bandförmiger Streifen 14 ausgebildet, der zweckmäßigerweise geradlinig verläuft. Er ist mit einer Reihe von Befestigungsaugen 16 versehen, die in Längsrichtung des Streifens 14 in vorgegebenen Abständen zueinander angeordnet sind. Die Befestigungsaugen 16 sind, wie insbesondere in den Fign. 3 bis 6 zu sehen ist, als beidseitig zur Ebene des Streifens 14 vorstehende zylindrische Ansätze ausgebildet, die mit zentrischen Bohrungen 18 versehen sind.

In den mittleren Bereichen zwischen den Befestigungsaugen 16 ist die Befestigungsleiste 10 mit Gelenkstellen 20 versehen, die durch eine Scherengeometrie dünnwandiger Leistenabschnitte gebildet werden, wie insbesondere in Fig. 2 zu sehen ist. Die Gelenkstellen 20 ermöglichen zum einen eine Änderung der Längserstreckung der Befestigungsleiste zwischen benachbarten Befestigungsaugen 16 und somit zum Toleranzausgleich und zum anderen eine Verformung der Befestigungsleiste in beliebigen Richtungen und somit eine paßgenaue Anlage der Befestigungsleiste an den Formverlauf der zu verbindenden Bauteile 2 und 4. Obwohl also die Befestigungsleiste zwecks einfacher Herstellbarkeit als geradliniges Band hergestellt wird, kann sie aufgrund der Gelenkstellen 20 sowohl in der Ebene der Fig. 2 wie auch in der Ebene der Fig. 3 gebogen wie auch beliebig verwunden werden, um die erwähnte Formanpassung zu ermöglichen.

Die Befestigungsleiste 10 ist ferner mit Ausnehmungen 22 sowie mit Stützrippen 24 versehen, wie in den Fig. 2 und 3 zu sehen ist. Die Ausnehmungen 22 dienen zur Materialersparnis und verleihen der Befestigungsleiste außerdem eine gewisse Elastizität. Diese Elastizität ermöglicht ein Verspannen der Befestigungsleiste im Zwischenraum zwischen dem Flansch 8 und der Oberfläche 5 des Bauteils 4 mittels der Stützrippen 24.

Wie insbesondere in Fig. 4 zu sehen ist, ist der Flansch 8 auf der der Oberseite 5 zugewandten Seite mit Führungsnuten 26 versehen, deren Form an den Umriß der Befestigungsaugen 16 angepaßt ist und die zur Seite hin offen sind, so daß sie beim seitlichen Einschieben der Befestigungsleiste 10 in den Zwischenraum die Befestiungsaugen führen und relativ zu Befestigungslöchern 28 und 30 im Flansch 8 bzw. im Bauteil 2 positionieren.

Der Zusammenbau der in Fig. 1 gezeigten Befestigungsanordnung geschieht wie folgt: Die Bauteile 2 und 4 werden relativ zueinander so positioniert, daß ihre Befestigungslöcher 28 und 30 miteinander fluchten. Die Befestigungsleiste 10 wird von der offenen Seite her in den Zwischenraum zwischen dem Flansch 8 und der Oberfläche 5 des Bauteils 4 eingeschoben, wobei die Führungsnuten 26, wie bereits erwähnt, zur Führung und Positionierung der Befestigungsaugen 16 dienen. Die Gelenkstellen 20 gleichen hierbei fertigungsbedingte Schwankungen in den Abständen zwischen den Befestigungsaugen 16 aus. Die Stützrippen 24 sorgen für einen sicheren Halt der Befestigungsleiste 10 im Zwischenraum.

Anschließend werden die Schrauben 12 durch die Befestigungslöcher 28, 30 hindurch in die Befestigungsaugen 16 eingeschraubt. Zwischen dem Flansch 8 des Bauteils 4 und dem Bauteil 2 können Dichtungen (nicht gezeigt) angeordnet werden. Zweckmäßigerweise sind die Schrauben 12 als selbstfurchende oder -schneidende Schrauben ausgebildet, die beim Einschrauben in die glatt zylindrischen Bohrungen 18 der Befestigungsaugen 16 in diesen jeweils ein Gewinde bilden. Stattdessen könnten die Befestigungsaugen auch mit einem vorgefertigten Gewinde versehen sein, so daß sich herkömmliche Schrauben verwenden lassen.

Die Befestigungsleiste 10 ist ein spritzgegossenes Kunststoffteil, das vorzugsweise aus einem thermoplastischen Kunststoff wie z.B. Polyamid oder Polypropylen besteht. Der Kunststoffkann einen Füllstoff wie z.B. Glasfasern enthalten, was jedoch nicht unbedingt erforderlich ist.

Die Schrauben können aus Metall bestehen; vorzugsweise werden jedoch Kunststoffschrauben verwendet.

Wie beschrieben, läßt sich die Befestigungsanordnung in einfacher Weise zusammenbauen, da lediglich die Befestigungsleiste eingeschoben und die Schrauben eingeschraubt werden müssen. Die Befestigungsanordnung durchdringt nicht das Bauteil 4, so daß dieses unversehrt bleibt und die Befestigungsanordnung vollständig hinter dem Bauteil 4 verborgen ist. Dennoch ist eine zuverlässige, dauerhafte und schwingungsfreie Verbindung der beiden Bauteile 2 und 4 sichergestellt.

## Patentansprüche

1. Befestigungsanordnung zum Befestigen eines ersten plattenförmigen Bauteils an einem zweiten plattenförmigen Bauteil, mit
einem Flansch (8), der an dem ersten Bauteil (2) anliegt und an dem zweiten Bauteil (4) mit vorgegebenem Abstand zu einer Oberfläche (5) des zweiten Bauteils (4) so angeformt ist, daß zwischen dieser Oberfläche (5) und dem Flansch (8) ein einseitig offener Zwischenraum vorhanden ist,
einer Befestigungsleiste (10), die mit einer Reihe von Befestigungsaugen (16) versehen ist und in den Zwischenraum so einsteckbar ist, daß die Befestigungsaugen (16) zu in entsprechenden Reihen angeordneten Befestigungslöchern (28, 30) im ersten Bauteil (2) und im Flansch (8) des zweiten Bauteils (4) ausgerichtet sind, und
einer entsprechenden Anzahl von Schrauben (12), die durch die Befestigungslöcher (28, 30) hindurch in die Befestigungsaugen (16) der Befestigungsleiste (10) einschraubbar sind.

2. Befestigungsanordnung nach Anspruch 1, dadurch gekennzeichnet, daß der Flansch (8) Führungsnuten (26) für die Befestigungsaugen (16) zum Einführen und Positionieren der Befestigungsleiste (10) im Zwischenraum aufweist.

3. Befestigungsanordnung nach Anspruch 1 oder 2, dadurch gekennzeichnet, daß die Schrauben (12) selbstfurchend oder -schneidend ausgebildet sind, um beim Einschrauben ein Gewinde in den Befestigungsaugen (16) zu erzeugen.

4. Befestigungsleiste für eine Befestigungsanordnung nach einem der vorhergehenden Ansprüche, dadurch gekennzeichnet, daß sie als in einer Ebene liegender bandförmiger Streifen (14) ausgebildet ist.

5. Befestigungsleiste nach Anspruch 4, dadurch gekennzeichnet, daß die Befestigungsaugen (16) als beidseitig zur Ebene des Streifens (14) vorstehende, mit einer durchgehenden Bohrung (28) versehene, zylindrische Ansätze ausgebildet sind.

6. Befestigungsleiste nach Anspruch 4 oder 5, dadurch gekennzeichnet, daß sie in Bereichen zwischen den Befestigungsaugen (16) Gelenkstellen (20) zum Toleranzausgleich für die Abstände zwischen den Befestigungsaugen (16) und/oder zur Formanpassung der Befestigungsleiste an beliebige Formen der Bauteile aufweist.

7. Befestigungsleiste nach Anspruch 6, dadurch gekennzeichnet, daß die Gelenkstellen (20) durch eine Scherengeometrie der entsprechenden Abschnitte der Befestigungsleiste gebildet werden.

8. Befestigungsleiste nach einem der Ansprüche 4 bis 7, gekennzeichnet durch senkrecht zur Ebene der Befestigungsleiste (10) abstehende Stützrippen (24) zum Verspannen der Befestigungsleiste (10) im Zwischenraum zwischen Flansch (8) und Oberfläche (5) des zweiten Bauteils (4).

9. Befestigungsleiste nach Anspruch 7, gekennzeichnet durch Ausnehmungen (22) zur Materialverringerung und/oder zum Erzielen einer Federwirkung zum Verspannen der Befestigungsleiste.

10. Befestigungsleiste nach einem der Ansprüche 4 bis 9, dadurch gekennzeichnet, daß sie als einstückiges spritzgegossenes Kunststoffteil ausgebildet ist.

11. Befestigungsleiste nach Anspruch 10, dadurch gekennzeichnet, daß sie aus einem thermoplastischen Kunststoff, insbesondere Polyamid oder Polypropylen, besteht.

12. Befestigungsleiste nach Anspruch 11, dadurch gekennzeichnet, daß der Kunststoff einen Füllstoff, insbesondere Glasfasern, enthält.
